# EUROPEAN PATENT APPLICATION

(11) **EP 0 869 450 A2**
(43) Date of publication of application: **07.10.1998**
(21) Application number: 98302383.9
(22) Date of filing: 27.03.1998
(51) Int. Cl.: G06F 17/50

(54) **Design work support system and method capable of quickly designing a desired cooling unit without relying upon experience of a designer**

(30) Priority: 31.03.1997 JP 80597/97
(71) Applicant: Sanden Corporation, Isesaki-shi, Gunma 372-8502 (JP)
(72) Inventor: Motegi, Toshiyuki, Isesaki-shi, Gunma 372 (JP); Takahashi, Hiroshi, Isesaki-shi, Gunma 372 (JP)
(74) Representative: Jackson, Peter Arthur

(57) **Abstract**

For supporting a design work of designing a cooling unit comprising a set of components and a plurality of pipes connecting the components, a design work support system (1) has a component attribute database (13A) for memorizing at least one kind of component attribute information for each of the components and a pipe design rule database (13B) for memorizing pipe design rules for said pipes. An input is carried out about design conditions relating to a desired design of the cooling unit. With reference to the component attribute information and the design conditions, a component selecting arrangement (11) selects the component set such that the design conditions are satisfied. With reference to the component attribute information of the component set, a component arrangement information producing arrangement (11) produces component arrangement information representative of an arrangement of each of the components in a machine room. With reference to the pipe design rules and the component arrangement information, a pipe attribute information producing arrangement (11) produces,pipe attribute information representative of information relating to a design of each of the pipes.

## Description

This invention relates to a design work support system for a cooling unit used, for example, in an automatic vending machine having a cooling function or cooling and heating functions.

A cooling unit for use in an automatic vending machine comprises a compressor, a condenser, a drier, an expansion valve, an evaporator, an accumulator, and a plurality of pipes connecting the above-mentioned components to circulate a refrigerant such as fluorocarbon. Upon designing the cooling unit, each of the above-mentioned components such as the compressor is selected from a plurality of candidates having different performances and characteristics so as to meet a desired cooling performance. Then, the components thus selected are arranged in a machine room so as not to interfere with one another. Furthermore, each of the pipes is designed in an appropriate manner so that no interference is caused with each component and any other pipe and that the cooling unit has a desired cooling ability. In particular, the pipes must be designed in accordance with the design know-how such as the layout technique and the vibration damping measure, taking into account backflow of oil, dormancy of the refrigerant, and heat exchange efficiency. Traditionally, the above-mentioned design work is carried out on the basis of the experience of an engineer.

However, if the engineer has narrow experience and is not sufficiently skilled in the design know-how, he requires much time to design the cooling unit. In addition, the cooling unit may not have a desired cooling ability and overheat of the cooling unit may occur. Generally, the design work adopts the trigonometric approach. This makes it difficult to intuitively find any interference of the components and the pipes with one another. Besides, a lot of time is required to extract necessary information from the drawing upon production and machining of the components and the pipes.

It is therefore an object of this invention to provide a design work support system and method enable of quickly designing a cooling unit having a desired cooling ability without relying upon experience of a skilled engineer.

Other objects of this invention will become clear as the description proceeds.

A design work support system to which this invention is applicable is for supporting a design work of designing a cooling unit arranged in a machine room. The cooling unit comprises a set of components and a plurality of pipes connecting the components to circulate a refrigerant therethrough. In the design work support system, the design work support system comprises component attribute memorizing means for memorizing at least one kind of component attribute information for each of the components, pipe design rule memorizing means for memorizing pipe design rules for the pipes, input means for inputting design conditions relating to a desired design of the cooling unit, component selecting means connected to the component attribute memorizing means and the input means for selecting, with reference to the component attribute information and the design conditions, the set of the components such that the design conditions are satisfied, component arrangement information producing means connected to the component attribute memorizing means and the component selecting means for producing, with reference to the component attribute information of the set of the components, component arrangement information representative of an arrangement of each of the components in the machine room without any mutual interference thereamong, and pipe attribute information producing means connected to the pipe design rule memorizing means and the component arrangement information producing means for producing, with reference to the pipe design rules and the component arrangement information, pipe attribute information representative of information relating to a design of each of the pipes.

A design work support method to which this invention is applicable is of supporting a design work of designing a cooling unit arranged in a machine room. The cooling unit comprises a set of components and a plurality of pipes connecting the components to circulate a refrigerant therethrough. In the design work support method, the design work support method comprising the steps of preliminarily memorizing at least one kind of attribute information for each of the components, memorizing pipe design rules for the pipes, inputting design conditions relating to a desired design of the cooling unit, selecting, with reference to the component attribute information and the design conditions, the set of the components such that the design conditions are satisfied, producing, with reference to the component attribute information of the set of the components, component arrangement information representative of an arrangement of each of the components in the machine room without any mutual interference thereamong, and producing, with reference to the pipe design rules and the component arrangement information, pipe attribute information representative of information relating to a design of each of the pipes.

In the accompanying drawings:
Fig. 1 is a block diagram showing a hardware structure of a design work support system according to an embodiment of this invention;
Figs. 2A and 2B show a data structure of a component attribute database illustrated in Fig. 1;
Figs. 3A and 3B show a data structure of a pipe design rule database illustrated in Fig. 1;
Fig. 4 shows a data structure of component arrangement information illustrated in Fig. 1;
Fig. 5 shows a data structure of pipe attribute information illustrated in Fig. 1;
Fig. 6 is a flow chart for describing operation executed by an automatic design program illustrated in Fig. 1; and
Fig. 7 is a flow chart for describing operation executed in a 3D-CAD system illustrated in Fig. 1.

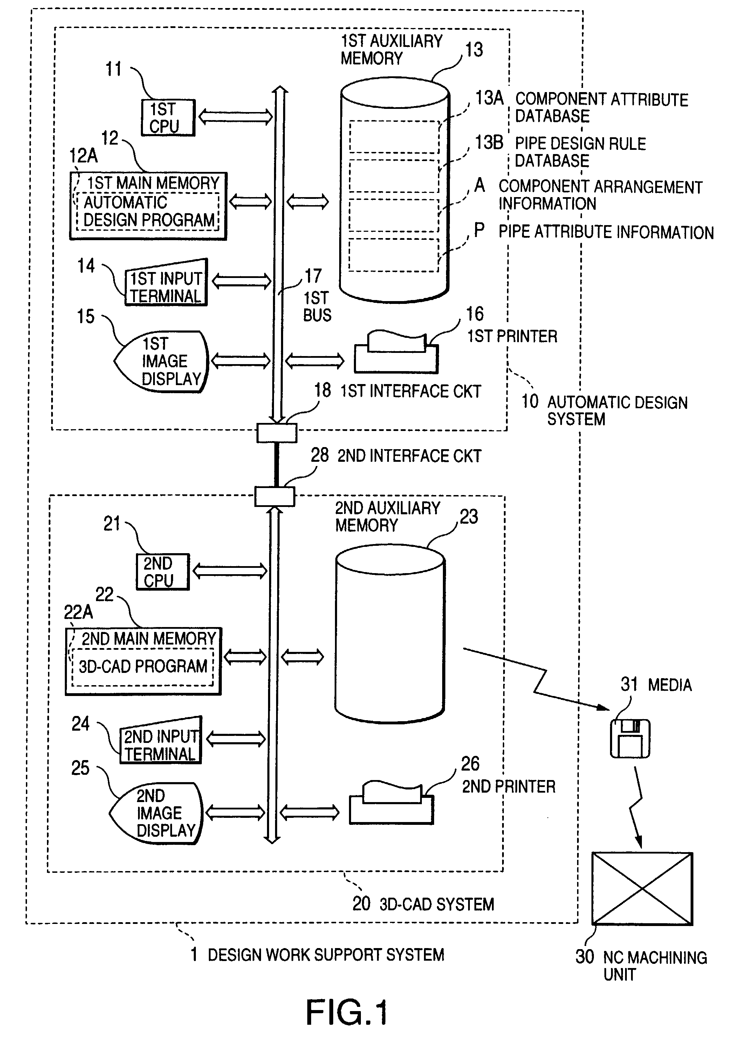

Referring to Fig. 1, description will be made as regards a design work support system according to this invention. The design work support system is designated by a reference numeral 1 and is for designing a cooling unit. The design work support system 1 comprises an automatic design system 10 and a 3D-CAD system 20 each of which is a computer system known in the art.

The automatic design system 10 comprises a first central processing unit (CPU) 11, a first main memory 12, a first auxiliary memory 13, a first input terminal 14, a first image display 15, a first printer 16, a first bus 17 as a data transmission path among the above-mentioned components, and a first interface circuit 18. The automatic design system 10 is connected via the first interface circuit 18 to the 3D-CAD system 20.

The first main memory 12 stores an automatic design program 12A. In accordance with the automatic design program 12A, the first CPU 11 executes an operation which will later be described. The first input terminal 14 comprises a keyboard and a mouse. The first input terminal 14 is operated by an operator such as a designer to supply the first CPU 11 with various kinds of information such as design particulars or data, namely, design conditions of the cooling unit to be designed. The first image display 15 comprises a cathode ray tube (CRT) and is for displaying on a display screen the various kinds of information related to a design work for the cooling unit in response to a request from the first CPU 11. The first printer 16 is for printing component arrangement information A representative of the arrangement of components of the cooling unit in a machine room.

The first auxiliary memory 13 memorizes a component attribute database 13A and a pipe design rule database 13B. Accessed by the first CPU 11, the first auxiliary memory 13 supplies the first CPU 11 with information contained in these databases. Through the operation according to the automatic design program 12A which will later be described, the component arrangement information A and pipe attribute information P are produced and memorized in the first auxiliary memory 13.

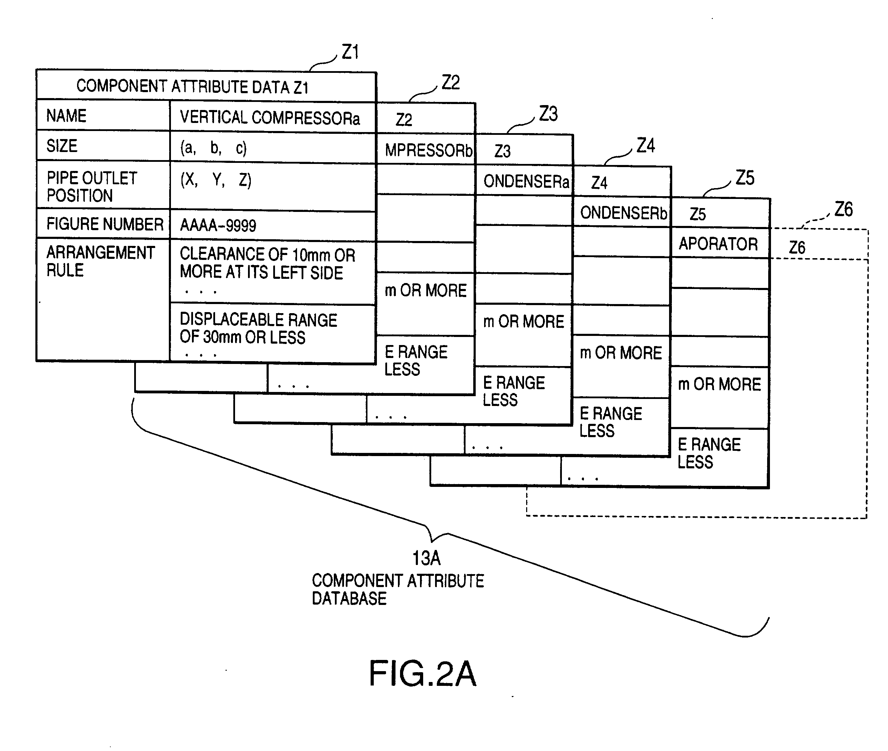

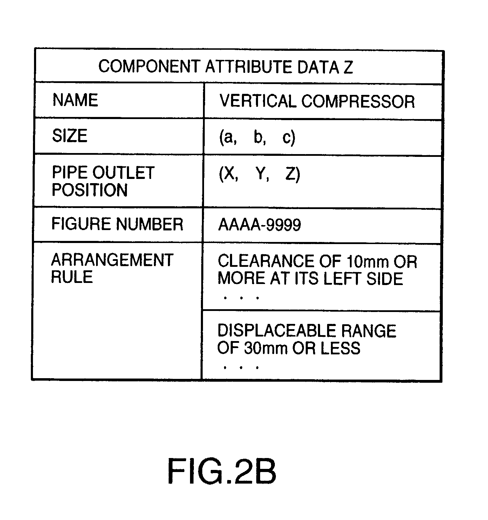

Turning to Figs. 2A and 2B, the description will be made as regards the component attribute database 13A. The component attribute database 13A contains component attribute data Z related to the components of the cooling unit, such as a compressor and a condenser. For each component, at least one kind of component attribute data Z are memorized in correspondence to at least one model, for example, different in ability. In the example illustrated in Fig. 2A, two kinds of component attribute data Z1 and Z2, two kinds of component attribute data Z3 and Z4, and a single kind of component attribute data Z5 are memorized for the compressor, the condenser, and an evaporator, respectively. As illustrated in Fig. 2B, each of the component attribute data Z includes various kinds of information for each component, such as the name, the size, the pipe outlet position, the figure number, and the arrangement rules. The component attribute database 13A is referred to as a component attribute memorizing arrangement.

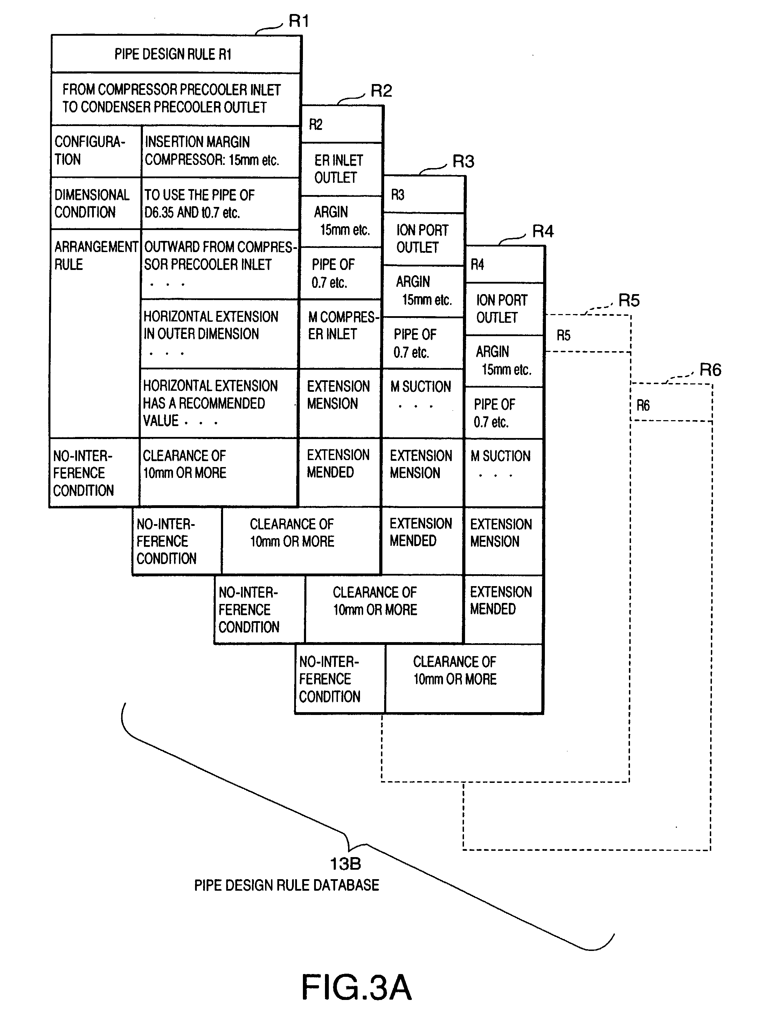

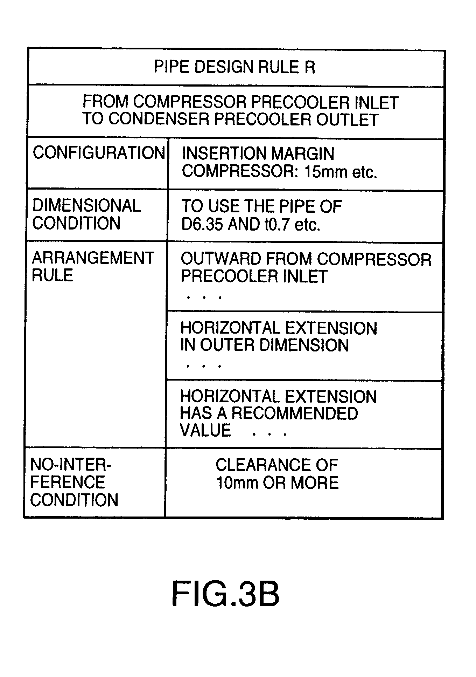

Turning to Figs. 3A and 3B, the description will be directed to the pipe design rule database 13B. It will be assumed here as an ordinary case that the cooling unit is provided with a precooler pipe extending from a compressor precooler outlet of the compressor to a compressor precooler inlet thereof through the condenser in the manner known in the art. In the ordinary case, the precooler pipe comprises an outlet side pipe extending from the compressor precooler outlet to a condenser precooler inlet of the condenser and an inlet side pipe extending from a condenser precooler outlet of the condenser to the compressor precooler inlet. The pipe design rule database 13B contains at least one pipe design rule R for each pipe required in the cooling unit. In the example illustrated in Fig. 3A, two pipe design rules R1 and R2 are memorized for "the inlet side pipe". For "a pipe connecting a compressor suction port and an accumulator outlet", two pipe design rules R3 and R4 are memorized. As illustrated in Fig. 3B, each pipe design rule R includes various information for each pipe, such as the indication of a component or components of the cooling unit to which it is applied, the configuration, the dimensional condition, the arrangement rules, and the condition for no interference. Such information is based on data accumulated via the experience of skilled engineers. The pipe design rule database 13B is referred to as a pipe design rule memorizing arrangement.

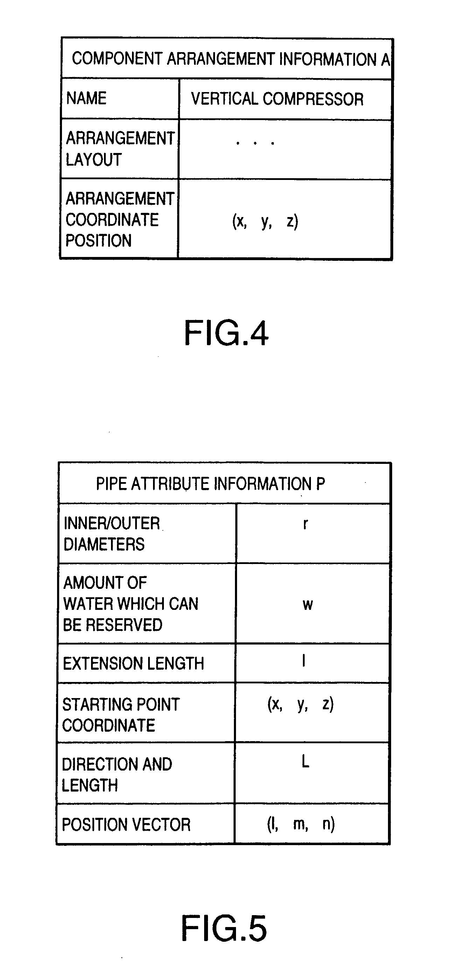

Turning to Fig. 4, the description will be directed to the component arrangement information A. The component arrangement information A includes various kinds of information such as the name of each of the components, the layout of the components, and the coordinate used in the arrangement of components. By the automatic design program 2A which will later be described in detail, the component arrangement information A is prepared for each component arranged in the machine room.

Turning to Fig. 5, the description will be directed to the pipe attribute information P. The pipe attribute information P is for each pipe connecting the components used in the cooling unit and includes various kinds of information such as the inner and the outer diameters of each pipe, the volume or capacity of each pipe, the extension length of each pipe, the XYZ coordinate as a starting point of the pipe configuration, the direction and the length on the XYZ coordinate, and the position vector. The pipe attribute information P is prepared by the automatic design program 12A, which will later be described, for each pipe connecting the components arranged in the machine room.

Turning back to Fig. 1, the description will be made as regards the 3D-CAD system 20. The 3D-CAD system 20 comprises a second central processing unit (CPU) 21, a second main memory 22, a second auxiliary memory 23, a second input terminal 24, a second image display 25, a second printer 26, and a second interface circuit 28. The 3D-CAD system 20 is connected to the automatic design system 10 via the first and the second interface circuits 18 and 28 connected each other. The 3D-CAD system 20 is operated by a 3D-CAD program 22A stored in the second main memory 22 to make the second image display 25 display an object in a two-dimensional or three-dimensional fashion. If necessary, the editing operation is executed by the use of the second input terminal 24. Herein, the operation is similar to that of a known 3D-CAD system and description will therefore be omitted. Furthermore, the 3D-CAD system 20 can transfer or transmit data via a medium 31 such as a floppy disk to a numerical control (NC) machining unit or system 30 which is known in the art and will be used in combination with the design work support system.

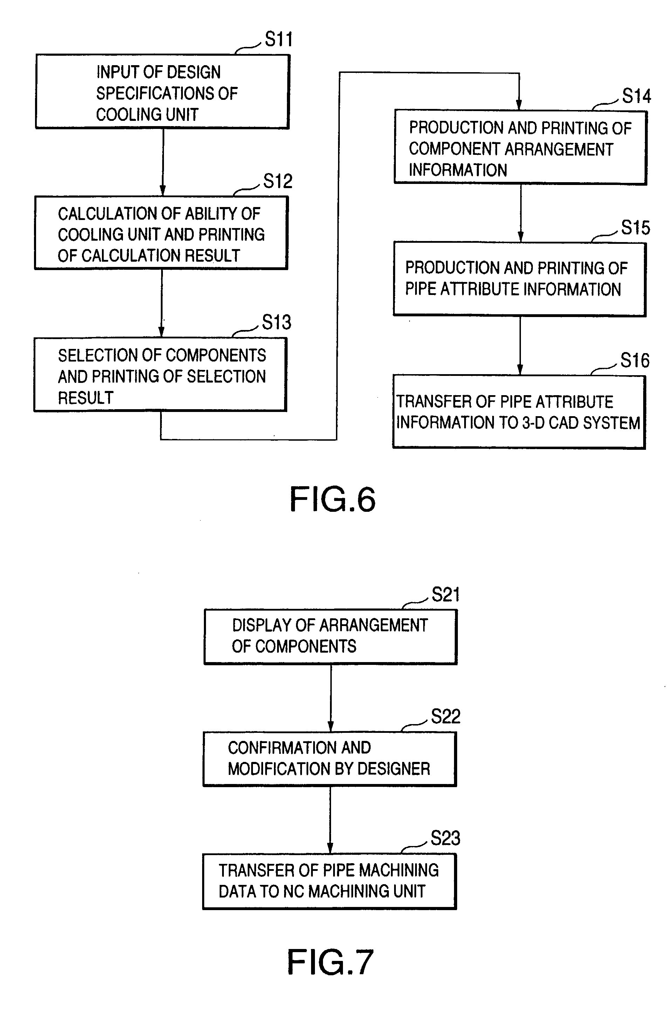

Next referring to Fig. 6, the description will be made about an operation of the automatic design program 12A stored in the first main memory 12.

At first, the design data or the design conditions of the cooing unit is inputted by the first input terminal 14 (step S11). It will be assumed here as a particular case that the cooling unit is designed for an automatic vending machine having a plurality of storage chambers having a temperature controlled for storing goods for sale. In the particular case, the design data includes an outer dimension of the automatic vending machine, the thickness of a heat insulator used in the automatic vending machine, a preselected temperature range in each storage chamber, a cooling and/or heating pattern among the storage chambers, a heat load in each storage chamber filled with the goods, and an arrangement space for the cooling unit.

Then, with reference to these design data, calculation is made of the ability of the cooling unit and the result of calculation is printed by the first printer 16 (step S12). Herein, the calculation of the ability comprises calculations of a heat balance, an essential refrigeration ability, an essential heating ability, and so on.

Next, with reference to the result of calculation in the step S12 and the component attribute data Z memorized in the component attribute database 13A, selection is made of the compressor, the condenser, the evaporator, a motor, and a fan having abilities satisfying the design data inputted in the step S11 and the result of the selection is printed by the first printer 16 (step S13). On carrying out the selection, the first CPU 11 serves as a component selecting arrangement.

Subsequently, with reference to the component attribute data Z memorized in the component attribute database 13A for each component, the component arrangement information A is produced to be memorized in the first auxiliary memory 13 and to be printed by the first printer 16 (step S14). The component arrangement information A represents how the components selected in the step S13 are arranged in the machine room so as to avoid mutual interference thereamong. Herein, the arrangement of the components is determined in the following manner. It is assumed here that the component attribute data Z related to a particular compressor include arrangement rules "To be arranged with a clearance not smaller than 10mm kept at its left side." and "A displaceable range is 30mm from the arrangement coordinate position and a displacement pitch is 1mm." In this event, (1) the compressor is at first arranged in an arrangement space of the machine room at a position such that a clearance of 10mm is kept at its left side. (2) Then, examination is made about presence or absence of interference between the compressor at that position and any other component. (3) In presence of the interference, the compressor is displaced so as to increase the clearance at its left side by the displacement pitch of 1mm. (4) In absence of the interference, that position is determined as an arrangement location of the compressor. (5) The above-mentioned operations are repeated until an interference-free location is found within the displaceable range. On producing the component arrangement information A, the first CPU 11 serves as a component arrangement information producing arrangement.

Subsequently, the designer indicates pipe outlets for the respective components selected in the step S13 in the order from upstream to downstream of the flow of the refrigerant. A particular pipe involved in the above-mentioned indication is designed in accordance with the pipe design rules R memorized in the pipe design rule database 13B to prepare the pipe attribute information P. The pipe attribute information P is memorized in the first auxiliary memory 13 and printed by the first printer 16 (step S15). It is assumed here that the designer indicates the pipe outlets as "the compressor precooler inlet → the condenser precooler outlet" and that the pipe design rules R for "the inlet side pipe" includes "The inlet side pipe shall be horizontally extended outward from the compressor precooler inlet.", "The horizontal extension shall be accommodated within the arrangement area in outer dimension and the length to a bending stop line shall not be longer than 40mm", "The horizontal extension has a recommended value equal to 5mm and may be varied at a pitch of 1mm.", and "The clearance not smaller than 10mm shall be secured from each component and any other pipe." In this event, in the manner similar to the arrangement of the components as described above, the pipes and their arrangement are designed so as to satisfy those rules to produce the pipe attribute information P. On producing the pipe attribute information P, the first CPU 11 serves as a pipe attribute information producing arrangement.

Next, the component arrangement information A prepared in the step S14 and the pipe attribute information P prepared in the step S15 are transferred through the first interface circuit 18 to the 3D-CAD system 20 and the operation according to the automatic design program 12A is completed (step S16). Herein, the pipe attribute information P transferred to the 3D-CAD system 20 has a format which can be usable in the 3D-CAD system.

Through the above-mentioned steps S11 to S16, once the designer inputs the design data of the cooling unit, the information of the cooling unit such as the cooling ability, the selection of the components such as the compressor to be used in the cooling unit, the component arrangement information A, the pipe attribute information P such as the outer diameter, the inner diameter, the arrangement location, and the shape of the pipes connecting the components are printed by the first printer 16. In addition, the component arrangement information A and the pipe attribute information P are transferred to the 3D-CAD system 20.

Next referring to Fig. 7, the operation in the 3D-CAD system 20 will be described. At first, the 3D-CAD system 20 is responsive to the component arrangement information A and the pipe attribute information P produced by the operation according to the automatic design program 12A and transferred via the second interface circuit 28 and makes the second image display 25 display the components and the pipes of the cooling unit in two-dimensional and three-dimensional fashions (step S21). On carrying out the step S21, the second CPU 21 will be referred to as a displaying arrangement.

The designer checks the design on the display screen to confirm the adaptability and, if necessary, to modify the design (step S22). In this event, the second CPU 21 will be referred to as an editing arrangement.

After completion of confirmation and modification by the designer, the 3D-CAD system 20 is responsive to the component arrangement information A and the pipe attribute information P produced and transferred by the automatic design program 12A or the modifications made in the step S22 and produces pipe machining data in a format processable in the NC machining system 30. The pipe machining data are transferred to the NC machining system 30 (step S23).

According to the design work support system described above, the designer can acquire, by simply inputting the design data of the cooling unit via the first input terminal 14, the selection of the components to be used in the cooling unit, the component arrangement information A representative of the arrangement of the components in the machine room, and the pipe attribute information P for the pipes connecting the components. These information is transferred to the 3D-CAD system 20 where the arrangement of the components and the pipes can be confirmed and modified on the second image display 25. Furthermore, the 3D-CAD system 20 produces the pipe machining data for use in the NC machining system 30. By simply inputting the pipe machining data in the NC machining system 30, the pipes can be manufactured. Thus, it is possible to quickly design the cooling unit having a desired cooling ability without relying upon the experience of the skilled engineers.

As described in the foregoing, the designer can acquire, by simply inputting the design data of the cooling unit into the input means, the selection of the components to be used in the cooling unit, the component arrangement information representative of the arrangement of the components in the machine room, and the pipe attribute information for the pipes connecting the components. In addition, the arrangement of the components and the pipes can be confirmed and modified on the display screen. Furthermore, the pipe attribute information is supplied to the NC machining system. Therefore, labor saving is achieved from a design stage to a manufacturing stage. Thus, it is possible to quickly design the cooling unit having a desired cooling ability without relying upon the experience of the skilled engineers.

While the present invention has thus far been described in conjunction with a preferred embodiment thereof, it will be possible for those skilled in the art to put this invention into practice in various other manners. For example, a set of a single CPU and a single main memory may be used for both of the automatic design system and the 3D-CAD system in common.

## Claims

1. A design work support system for supporting a design work of designing a cooling unit arranged in a machine room, said cooling unit comprising a set of components and a plurality of pipes connecting said components to circulate a refrigerant therethrough, said design work support system comprising:
component attribute memorizing means for memorizing at least one kind of component attribute information for each of said components;
pipe design rule memorizing means for memorizing pipe design rules for said pipes;
input means for inputting design conditions relating to a desired design of said cooling unit;
component selecting means connected to said component attribute memorizing means and said input means for selecting, with reference to said component attribute information and said design conditions, said set of the components such that said design conditions are satisfied;
component arrangement information producing means connected to said component attribute memorizing means and said component selecting means for producing, with reference to said component attribute information of said set of the components, component arrangement information representative of an arrangement of each of said components in said machine room without any mutual interference thereamong; and
pipe attribute information producing means connected to said pipe design rule memorizing means and said component arrangement information producing means for producing, with reference to said pipe design rules and said component arrangement information, pipe attribute information representative of information relating to a design of each of said pipes.

2. A design work support system as claimed in claim 1, further comprising:
an image display;
displaying means connected to said component attribute memorizing means, said component arrangement information producing means, said pipe attribute information producing means, and said image display for displaying on said image display an arrangement of each of said components and of said pipes in said machine room with reference to said component attribute information, said component arrangement information, and said pipe attribute information; and
editing means connected to said displaying means for editing said component arrangement information and said pipe attribute information on said image display.

3. A design work support system as claimed in - claim 1, further comprising means connected to said pipe attribute information producing means for transmitting said pipe attribute information towards a numerical said pipe attribute information towards a numerical control machining unit which is used in combination with said design work support system.

4. A design work support method of supporting a design work of designing a cooling unit arranged in a machine room, said cooling unit comprising a set of components and a plurality of pipes connecting said components to circulate a refrigerant therethrough, said design work support method comprising the steps of:
preliminarily memorizing at least one kind of attribute information for each of said components;
memorizing pipe design rules for said pipes;
inputting design conditions relating to a desired design of said cooling unit;
selecting, with reference to said component attribute information and said design conditions, said set of the components such that said design conditions are satisfied;
producing, with reference to said component attribute information of said set of the components, component arrangement information representative of an arrangement of each of said components in said machine room without any mutual interference thereamong; and
producing, with reference to said pipe design rules and said component arrangement information, pipe attribute information representative of information relating to a design of each of said pipes.

5. A design work support method as claimed in claim 4, further comprising the steps of:
displaying on an image display an arrangement of each of said components and of said pipes in said machine room with reference to said component attribute information, said component arrangement information, and said pipe attribute information; and
editing on said image display said component arrangement information and said pipe attribute information.

6. A design work support method as claimed in claim 4, further comprising the step of transmitting said pipe attribute information towards a numerical control machining unit.
